# EUROPEAN PATENT SPECIFICATION

(11) **EP 4 095 795 B1**
(45) Date of publication and mention of the grant of the patent: **14.08.2024**
(21) Application number: 21176536.7
(22) Date of filing: 28.05.2021
(51) Int. Cl.: G06T 7/00

(54) **AUTOMATED OPTICAL GUIDE**
AUTOMATISIERTE OPTISCHE FÜHRUNG
GUIDE OPTIQUE AUTOMATISÉ

(43) Date of publication of application: 30.11.2022
(73) Proprietor: FUJITSU LIMITED, Kanagawa 211-8588 (JP)
(72) Inventor: GEORGESCU, Serban, London, W13 8NH (GB); CHAULET, Nicolas, London, N1 9UU (GB)
(74) Representative: Haseltine Lake Kempner LLP

(56) References cited:
- EP-A1- 3 239 927
- GB-A- 2 537 681
- US-A1- 2010 194 749
- US-A1- 2019 156 472
- ZENG SHIQIN ET AL: "User exemplar-based building element retrieval from raw point clouds using deep point-level features", AUTOMATION IN CONSTRUCTION, ELSEVIER, AMSTERDAM, NL, vol. 114, 17 March 2020 (2020-03-17), XP086117549, ISSN: 0926-5805, [retrieved on 20200317], DOI: 10.1016/J.AUTCON.2020.103159
- LIN WEIYANG ET AL: "Recognition and Pose Estimation of Auto Parts for an Autonomous Spray Painting Robot", IEEE TRANSACTIONS ON INDUSTRIAL INFORMATICS, IEEE SERVICE CENTER, NEW YORK, NY, US, vol. 15, no. 3, March 2019 (2019-03-01), pages 1709 - 1719, XP011713827, ISSN: 1551-3203, [retrieved on 20190306], DOI: 10.1109/TII.2018.2882446

## Description

The present invention relates to automatic inspection, and in particular to an automatic inspection method, a computer program, and an information processing apparatus. Automatic inspection involves, among other things, the process of checking whether an inspection target satisfies a set of design specifications. The inspection target may be a 3D design (e.g. a computer aided design (CAD) model of a product) or a 3D object (e.g. the product itself after it has been manufactured).

Product inspection (e.g. automatic inspection), also referred to as product verification, is an essential part of modern manufacturing. Verification is performed at different stages of the manufacturing process, both before (during design) and after manufacturing a product.

Before manufacturing, design verification may be done in multiple ways, such as visually (during design reviews) or automatically (using Design Rule Checks). After a product has been manufactured, it may be measured and tested in a multitude of ways in order to make sure it matches the design specifications. Verification of manufactured products may be done manually or automatically in AOI (Automatic Optical Inspection) systems.

The automation of product verification provides multiple benefits, such as faster turnaround time, reduced labour cost and consistency across inspections. Automated verification systems may be rule-based, where a number of rules are executed in order to establish whether a product is good or defective, or AI (Artificial Intelligence) based, where the rules are learned from a database of examples. Rule-based systems, while easy to understand and implement, are notoriously difficult to maintain, as the number and complexity of the rules increases as products get more complex and more varied. Hence, modern verification systems tend to be Al based or to mix Al with rules.

Recently, Deep Learning (DL) models are being widely employed for Al-based computer vision tasks. DL architectures such as ResNet (described in "Deep Residual Learning for Image Recognition", by He et al, available at https://arxiv.org/pdf/1512.03385.pdf) or YOLO (described in "YOLOv4: Optimal Speed and Accuracy of Object Detection", by Bochkovskiy et al, available at https://arxiv.org/abs/2004.10934) have greatly outperformed Al models with hand-crafted features, therefore DL has become the method of choice for most practitioners. Here, "hand-crafted features" means filters or processes that are manually created by an operator (a human) to detect certain types of patterns that may be correlated with e.g. defects. Such hand-crafted features are used in "traditional" AI (i.e. not DL) and are usually fed into a simple AI model (e.g. a linear classifier, a shallow neural network, etc.) in order to predict e.g. whether an object has defects or not. As opposed to the human knowledge and intuition required for creating hand-crafted features, DL models use large amounts of training data in order to learn their own features (in other words, an advantage of DL models is that they learn from training data the features that may otherwise need to be "hand-crafted" in traditional AI models). In general, DL models need to be trained for all types (classes) of objects that they need to classify or detect. This is becoming an important issue when applying DL in industry, where large and well curated datasets are not readily available and take considerable time and effort to create.

Automatic verification of product designs requires knowledge about components used in the design. If the design is an assembly model, where each component is an individual CAD solid, usually using a hierarchical structure (assembly tree) means that information about components is readily available. However, there are many cases where multiple components are combined together into one solid and there is no information (metadata) about the location of each component inside that solid. This situation is often found when dealing with complex plastic parts (e.g. a laptop cover) which contain many components (also called features), such as clips, bosses, ribs, etc.

Detecting such components (i.e. classification (determining the type of the component) and localization (determining the location of the component)) is possible using state of the art Deep Learning methods such as 3D segmentation (e.g. PointNet++, described in "PointNet++: Deep Hierarchical Feature Learning on Point Sets in a Metric Space", by Qi et al, available at https://arxiv.org/abs/1706.02413) or 3D detection (e.g. VoteNet, described in "Deep Hough Voting for 3D Object Detection in Point Clouds", by Qi et al, available at https://arxiv.org/abs/1904.09664) network architectures.

Current automatic inspection systems rely on either Computer Vision methods, DL methods, or a combination of the two.

Computer Vision based methods are sequences of operations on 2D images or 3D scans which resemble rule-based systems. For all but the simplest operations, they require extensive manual tuning and calibration and are difficult to maintain. Therefore, their application is mostly limited to computing the difference between a representation of the inspection target (e.g. a photo of the manufactured product) with a stored reference and highlighting the differences.

Automatic verification of physical products is usually done using both classical Computer Vision algorithms and AI techniques. Unlike automatic design verification where the design to analyze is already in digital form, in this case the physical product needs to be digitized. This may be done using digital cameras, 3D scanners, etc. Following digitisation, DL methods similar to those used for automatic design verification may be used.

DL methods may detect complex patterns and as such may be capable of detecting all the components of an inspection target. However, in order to be able to detect a specified component, a DL method needs to be trained with (usually a large amount of) examples of that particular component. A DL method will not be able to detect components that it has not seen at training time, and the model needs to be updated every time a new component is added to the system. This is a severe limitation both for the system builder, who needs to obtain training data and customize the system for all possible use cases, and for the system user, who cannot easily extend the system without help from either the vendor or an AI specialist.

One additional limitation of DL methods is that in most cases they do not provide the exact orientation of the detected object, only an approximate bounding box. Therefore, if a design rule requires the exact orientation of the object, this has to be found using a separate method. <INSERT PAGES 3a AND 3b HERE>

It is desirable to provide an improved automatic inspection method in light of the above. The present invention is defined by the independent claims, to which reference should now be made. Specific embodiments are defined in the dependent claims.

According to an example of a first aspect there is disclosed herein a computer-implemented automatic inspection method comprising computing target feature vectors for points in a 3D (3-dimensional) point-cloud representation of an inspection target; computing component feature vectors for points in a 3D (3-dimensional) point-cloud representation of a (shape of a) component; and performing matching between the target feature vectors and the component feature vectors to obtain point pairs each comprising a said point in the 3D point-cloud representation of the inspection target and a said point Reference may be made to any of:
a paper titled "User exemplar-based building element retrieval from raw point clouds using deep point-level features" submitted by Zeng Shiqin et. al. in Automation in Construction, Elsevier, Amsterdam, NL, vol. 114, 17 March 2020, XP086117549;
GB 2 537 681 A, which relates to a method of detecting objects within a 3D environment, in which objects within a three-dimensional (3D) environment are detected by obtaining a point-cloud environment representation comprising a set of point locations, and converting the point-cloud to a 3D feature grid by dividing the 3D space into cells according to a grid size, determining whether the cells contain point-cloud points, and mapping any that do to a feature vector, and mapping any that do not to a zero feature vector;
a paper titled "Recognition and Pose Estimation of Auto Parts for an Autonomous Spray Painting Robot" submitted by Lin Weiyang et. al. in IEEE Transactions on Industrial Informatics, IEEE Service Center, New York, NY, US, vol. 15, no. 3, 1 March 2019 (2019-03-01), pages 1709-1719, XP011713827;
US 2010/194749 A1, which relates to a method for non-destructive examination of components within an assembly, including producing an image of at least a portion of the assembly, extracting a point cloud of the image, registering the point cloud to a CAD coordinate system, and determining points in the point cloud of the image that are more than a selected distance from surfaces on a corresponding CAD model utilizing the same CAD coordinate system;
US 2019/156472 A1, which relates to a system and method for performing real-time quality inspection of objects including a transport to move objects being inspected, allowing the inspection to be performed in-line, wherein at least one optical acquisition unit is provided that captured optical images of the objects being inspected, the captured optical images are matched to CAD models of objects, and the matched CAD model is extracted, a laser with an illumination light beam has a wavelength in the violet or ultraviolet range then conducts scans of the objects, which are formed into three-dimensional point clouds, and the point clouds are compared to the extracted CAD models for each object, where CTF are compared to user input or CAD model information and the object is determined to be acceptable or defective based on the extent of deviation between the point cloud and the CAD model; and
EP 3 239 927 A1, which relates to a method for completeness inspection of an assembled structure to check whether said structure has all the mounted parts, comprising scanning the whole assembled structure with an active ranging scanner, thus obtaining a 3D picture, obtaining a 3D model of the whole structure based on CAD data, subdividing said 3D picture into a number of smaller picture comparison areas and said 3D model into a number of smaller corresponding model comparison areas using a best fit algorithm, thus obtaining a set of final picture comparison areas and corresponding final model comparison areas, for each final model comparison area, identifying desired mounting parts located therein and searching for mounted parts in the corresponding final picture comparison area that match said desired mounting parts, and identifying the desired mounting parts, which have no matching mounted part in the final picture comparison areas, as missing from the assembled structure.
in the 3D point-cloud representation of the component to determine whether the component is present in the inspection target.

Such an example provides an Al-based inspection method that may easily scale with the number of shapes (components) to be detected in the inspection target (or the number of components in a component database) and/or the complexity of the inspection target, and/or may be extended to various domains of application, for example various aspects of manufacturing.

While traditional AI methods that involve detection require each object to be detected to be labelled, a method according to the present invention does not require any labelling. For example, it may make use of existing CAD data. This reduces the solution creation time and cost and also future-proofs it.

Embodiments may be applied for 3D object detection applications where the expected variation of the shape of the object to be located (the component) is minimal. Such a situation naturally arises in verification scenarios, where the task is to confirm that a design or model (inspection target) is of a certain type (i.e. matches a reference design (which may be defined by a specification)). Significant variations from the reference designs may be considered to be errors.

Among others, an advantage of the present invention is that 3D detection without the need of training data makes the solution much easier and cheaper to apply and maintain.

The method may further comprise outputting an inspection report comprising a determination of whether the component is present in the inspection target.

The method may comprise using a pre-trained deep neural network, DNN, to compute (or extract) the target feature vectors and the component feature vectors. The pre-trained DNN may be a DNN trained on partial shapes of the component.

The method may comprise performing matching by using a nearest neighbor search in a feature space of the target feature vectors and the component feature vectors.

The method comprises computing a geometric transformation between the (3D point-cloud representation of the) component and the (3D point-cloud representation of the) inspection target and determining that the component is present in the inspection target when a result of the geometric transformation (and of the matching) meets a predefined criterion. The predefined criterion may be whether a number or proportion of points matched between the 3D point-cloud representation of the inspection target and the 3D point-cloud representation of the component according to the geometric transformation which correspond to a (said) point pair is above a threshold.

The method may comprise finding a geometric transformation which maximizes the number or proportion of points matched between the 3D point-cloud representation of the inspection target and the 3D point-cloud representation of the component according to the geometric transformation which corresponds to a (said) point pair.

The point pairs mentioned above may be referred to as matching point pairs. The method may comprise computing a geometric transformation between the (3D point-cloud representation of the) component and the (3D point-cloud representation of the) inspection target to give rise to geometric point pairs each comprising a said point in the 3D point-cloud representation of the inspection target and a said point in the 3D point-cloud representation of the component and determining that the component is present in the inspection target when a number or proportion of the geometric point pairs which correspond to (or are the same as) a (said) matching point pair is above a threshold.

The method may comprise finding a geometric transformation which maximizes the number or proportion of the geometric point pairs which correspond to (or are the same as) a (said) matching point pair.

The inspection target may comprise a plurality of components combined together into a solid.

The inspection target and/or the component may be a manufactured product. The method may comprise, before computing target and/or component feature vectors, obtaining the 3D point cloud representation of the inspection target and/or component using 3D scanning hardware such as structured light sensors, time-of-flight sensors, light detection and ranging, LiDAR, cameras, or a plurality of cameras in combination with photogrammetry. The method may comprise using multiple 3D scans of the inspection target and/or component to obtain multiple 3D point-cloud representations and merging the multiple 3D point-cloud representations together using point-cloud registration.

The method may comprise, before computing target feature vectors, converting a 3D representation of the inspection target into the 3D point cloud representation of the inspection target, optionally by sampling surfaces (or boundaries) of at least one model of the inspection target, which may for example be a computer aided design, CAD, model.

The method may comprise, before computing component feature vectors, converting a 3D representation of the component into the 3D point-cloud representation of the component, optionally by sampling surfaces (or boundaries) of a model of the component, which may for example be a computer aided design, CAD, model. The conversion of the 3D representation of the component into the 3D point-cloud representation of the component may be performed using the same or similar, or substantially the same or substantially similar, conversion parameters (e.g. (substantially) the same or a (substantially) similar sampling resolution in the conversion) as used in the conversion of the model of the inspection target to the 3D point-cloud representation of the inspection target. Using the same or similar, or substantially the same or substantially similar, conversion parameters means that the 3D point-cloud representation of the inspection target will have a similar point distribution to the 3D point-cloud representations of the component which is advantageous.

The method may comprise computing at least one of a rotation factor, a translation factor, and a scaling factor between the (3D point-cloud representation of the) component and a part of the (3D point-cloud representation of the) inspection target corresponding to the component and defined by the point pairs; and checking the computed at least one factor against a specification defining a range of values for the at least one factor and determining whether the computed at least one factor is within the range of values defined in the specification.

The inspection report may comprise a determination of whether the computed at least one factor is within the range of values defined in the specification. The inspection report may comprise a determination of whether the component is present in the inspection target in agreement with the range of values defined in the specification.

The method may comprise computing rotation, translation, and scaling factors between the (3D point-cloud representation of the) component and a part of the (3D point-cloud representation of the) inspection target corresponding to the component and defined by the point pairs; and checking the computed rotation, translation, and scaling factors against a specification defining a range of values for each of the rotation, translation, and scaling factors and determining whether each of the computed rotation, translation, and scaling factors is within the corresponding range of values defined in the specification (to determine whether the component is present in the inspection target at the orientation, position, and size as defined in the specification).

The specification may define the orientation, position, and size at which the component should be present in the inspection target.

The orientation of the detected object (component) may be provided directly at the step of computing the geometric transformation and in this case there is no need to compute it as a post-processing stage. Any of the rotation, scaling, and translation factors may be provided at the step of computing the geometric transformation.

The inspection report may comprise a determination of whether each of the computed rotation, translation, and scaling factors is within the corresponding range of values defined in the specification. The inspection report may comprise a determination of whether the component is present in the inspection target in agreement with the ranges of values defined in the specification. The inspection report may comprise a determination of whether the component is present in the inspection target at the orientation, position, and size as defined in the specification.

The method may comprise, for each of a plurality of components, computing feature vectors for points in a 3D (3-dimensional) point-cloud representation of (a shape of) the component; and performing matching between the target feature vectors and the component feature vectors to obtain point pairs each comprising a said point in the 3D point-cloud representation of the inspection target and a said point in the 3D point-cloud representation of the component to determine whether the component is present in the inspection target. The method may comprise outputting an inspection report comprising a determination of whether each (or at least one) of the plurality of components is present in the inspection target.

The method may comprise computing a distance and/or an angle between first and second components of the plurality of components; and checking the computed distance and/or angle against a specification defining a range of values of the distance between the first and second components and/or a range of values of the angle between the first component and the second component and determining whether the computed distance and/or angle is within the range of values defined in the specification.

The method may comprise, for each (or at least one) of the plurality of components, computing at least one of a rotation factor, a translation factor, and a scaling factor between the (3D point-cloud representation of the) component and a part of the (3D point-cloud representation of the) inspection target corresponding to the component and defined by the point pairs; and checking the computed at least one factor against a specification defining a range of values for the at least one factor and determining whether the computed at least one factor is within the range of values defined in the specification.

The inspection report may comprise, for each (or for at least one) component, a determination of whether the computed at least one factor is within the range of values defined in the specification. The inspection report may comprise a list of components which have been determined to be present in the inspection target and/or a list of components which satisfy the specification(s). The inspection report may comprise a list of the components which have been determined to be not present in the inspection target and/or a list of components which do not satisfy the specification(s).The inspection report may comprise, for each (or for at least one) component, a determination of whether the component is present in the inspection target in agreement with the range of values defined in the specification.

The method may comprise, for each (or at least one) of the plurality of components, computing rotation, translation, and scaling factors between the (3D point-cloud representation of the) component and a part of the (3D point-cloud representation of the) inspection target corresponding to the component and defined by the point pairs; and checking the computed rotation, translation, and scaling factors against a specification defining a range of values for each of the rotation, translation, and scaling factors and determining whether each of the computed rotation, translation, and scaling factors is within the corresponding range of values defined in the specification (to determine whether the component is present in the inspection target at the orientation, position, and size as defined in the specification).

The specification may define the orientation, position, and size at which each (or at least one) component should be present in the inspection target.

The inspection report may comprise, for each (or at least one) component, a determination of whether each of the computed rotation, translation, and scaling factors is within the corresponding range of values defined in the specification. The inspection report may comprise, for each (or at least one) component, a determination of whether the component is present in the inspection target in agreement with the ranges of values defined in the specification. The inspection report may comprise, for each (or at least one) component, a determination of whether the component is present in the inspection target at the orientation, position, and size as defined in the specification.

The shape/geometrical description and optionally the dimension of at least one component may be stored in a component database. The specification (for each or at least one component) may be stored in the component database.

Any said range of values may comprise a correct value and a tolerance defining the range. An inspection report may comprise an indication of how close a said computed factor is to its correct value.

A value may be defined instead of a range of values, and a determination as to whether a computed factor is equal to the defined value may be made instead of determining whether the computed factor is within the range of values. An inspection report may comprise an indication as to whether the computed factor is equal to the defined value.

For each (or at least one) of the components, the correct value of the rotation factor may comprise a sequence of rotation angles with respect to a coordinate axis; or a rotation matrix. For each (or at least one) of the components, an orientation of the component (or information describing an orientation of the component in 3D space) may be stored in the component database, and/or the computed rotation factor may be a rotation factor between the orientation stored in the component database and an orientation of the part of the inspection target corresponding to the component and defined by the point pairs.

For each (or at least one) of the components, the correct value for the rotation factor may comprise a sequence of rotation angles with respect to a coordinate axis between the orientation of the component stored in the component database and the orientation of the part of the inspection target corresponding to the component and defined by the point pairs; or a rotation matrix describing a rotation between the orientation of the component stored in the component database and the orientation of the part of the inspection target corresponding to the component and defined by the point pairs.

The orientation of at least one component stored in the component database may comprise a sequence of rotation angles with respect to a coordinate axis; or a rotation matrix.

The method may comprise displaying the inspection report, optionally on a display device.

According to an example of a second aspect there is disclosed herein a computer program which, when run on a computer, causes the computer to compute target feature vectors for points in a 3D (3-dimensional) point-cloud representation of an inspection target; compute component feature vectors for points in a 3D (3-dimensional) point-cloud representation of a (shape of a) component; and perform matching between the target feature vectors and the component feature vectors to obtain point pairs each comprising a said point in the 3D point-cloud representation of the inspection target and a said point in the 3D point-cloud representation of the component to determine whether the component is present in the inspection target.

The computer program may cause the computer to output an inspection report comprising a determination of whether the component is present in the inspection target.

The computer program may cause the computer to compute at least one of a rotation factor, a translation factor, and a scaling factor between the component and a part of the inspection target corresponding to the component and defined by the point pairs; and check the computed at least one factor against a specification defining a range of values for the at least one factor and determine whether the computed at least one factor is within the range of values defined in the specification.

The computer program may cause the computer to use a pre-trained deep neural network, DNN, to compute (or extract) the target feature vectors and the component feature vectors.

The computer program may cause the computer to perform matching by using a nearest neighbor search in a feature space of the target feature vectors and the component feature vectors.

According to an example of a third aspect there is disclosed herein an information processing apparatus comprising a memory and a processor connected to the memory, wherein the processor is configured to compute target feature vectors for points in a 3D (3-dimensional) point-cloud representation of an inspection target; compute component feature vectors for points in a 3D (3-dimensional) point-cloud representation of a (shape of a) component; and perform matching between the target feature vectors and the component feature vectors to obtain point pairs each comprising a said point in the 3D point-cloud representation of the inspection target and a said point in the 3D point-cloud representation of the component to determine whether the component is present in the inspection target.

The processor may be configured to output an inspection report comprising a determination of whether the component is present in the inspection target. The apparatus may comprise a display configured to display the inspection report.

The processor may be configured to compute at least one of a rotation factor, a translation factor, and a scaling factor between the component and a part of the inspection target corresponding to the component and defined by the point pairs; and check the computed at least one factor against a specification (stored in the memory and) defining a range of values for the at least one factor, and determine whether the computed at least one factor is within the range of values defined in the specification.

The processor may be configured to use a pre-trained deep neural network, DNN, to compute (or extract) the target feature vectors and the component feature vectors.

A component database as defined in the first and/or second aspects may be stored in the memory. The specification and the component database may be as defined in the first and/or second aspects.

Features relating to an aspect may be applied to any other aspect/embodiment. Features relating to the method (first) aspect may be applied to the computer program and apparatus (second and third) aspects. The computer program of the second aspect may cause the computer to perform any of the method steps of the first aspect. The processor of the third aspect may be configured to perform any of the method steps of the first aspect.

Reference will now be made, by way of example, to the accompanying drawings, in which:
Figure 1 is a diagram of an overview of an operation of an information processing apparatus;
Figure 2 is a flowchart of an automatic inspection method;
Figure 3 is a diagram of a component database;
Figure 4 is a flowchart of an automatic inspection method;
Figure 5 is a flowchart of an automatic inspection method;
Figure 6 is a diagram useful for understanding the present disclosure;
Figure 7 is a diagram useful for understanding the present disclosure; and
Figure 8 is a diagram of an information processing apparatus.

An automatic inspection method according to an example arrangement checks whether a component or a collection of components (or parts) that should be present in an inspection target is present in the inspection target, and may check whether a component satisfies at least one design specification (or simply a specification). A specification may refer to the location, size, and/or orientation of a component (translation factor and/or scaling factor and/or rotation factor). A specification may be provided for each component or a specification may comprise at least one of a translation factor, a scaling factor, and a rotation factor for more than one component. A factor in such a specification may be referred to as a correct value for the factor (e.g. a correct value for the rotation factor may defined in the specification).

The automatic inspection method may produce an inspection report that provides information regarding whether or not the component(s) is/are present, and optionally regarding the satisfaction of the design specifications. For example, it may output a list of components which do not satisfy the design specifications, if any.

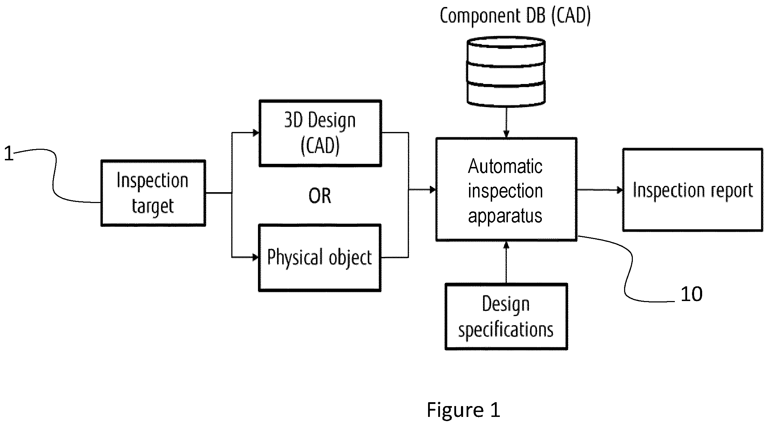

Figure 1 shows an overview of an operation of information processing apparatus (automatic inspection apparatus) 10 according to an example arrangement.

The apparatus 10 works in the following way:
**1.** An inspection target 1 (which may, for example, be a 3D design or physical object) is converted to a point cloud form
**2.** The location, orientation, and scale of at least one component defined in a Component DB (database) associated with the apparatus 10 or stored by the apparatus 10 are computed by way of matching the part (component) shape with the inspection target 1 using a point cloud registration method
3. The computed location, orientation, and scale are checked against input/stored design specification(s)
**4.** A report is generated based on the results of the matching

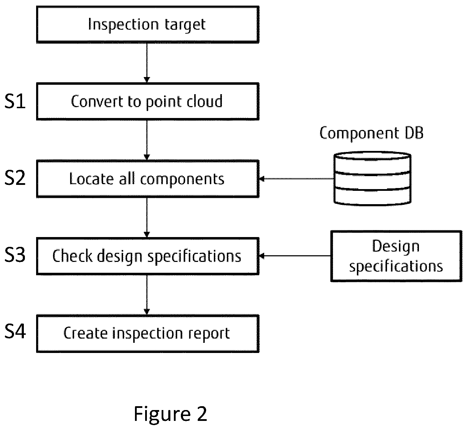

A high level overview of an automatic inspection method (which may be performed by the apparatus 10) according to an example arrangement is shown in Figure 2.

First, at step S1 an inspection target 1 is converted into a 3D point cloud format (a 3D point-cloud representation). This is possible regardless of the inspection target 1 being a physical object (after manufacturing) or a design (before manufacturing) and has the benefit of enabling all subsequent steps to treat both situations in the same way.

Next, at step S2 components described in a component database (Component DB) and which are referenced inside input/stored design specification(s) are located, i.e. detected. During step S2 the presence or absence of the components as well as (if present) the position/location, size, and orientation of the components is determined/computed. The components to be detected may be provided as CAD models and may be represented in different ways such as in an analytical form (e.g. STEP (STandard for the Exchange of Product model data), IGES (Initial Graphics Exchange Specification), etc.), a triangulated form (e.g. STL (Standard Triangle Language or Standard Tessellation Language), PLY (polygon file format), OBJ (OBJ file), etc.) or a point cloud form (e.g. LAS (LASer format), CSV (Comma Separated Value), etc.). For components whose shape may vary, multiple CAD models may be stored in the component DB to account for the different variations. Alternatively, each variation may be stored in the component DB under a different name (e.g. as a different component). For each occurrence of a component (if any), the detection module will output the location, size, and orientation. The location, size, and orientation may be computed as a translation factor, a scaling factor, and a rotation factor, respectively.

After the detection stage S2 has been completed, the location, size and orientation for each detected component is used in the next step S3 that checks whether the design specifications are met. Specifications may take the form of rules and may be customer specific. Examples of such rules are the following:
- A Component A has to be present in the inspection target 1 (e.g. to ensure that the correct component has been used)
- A Component A and a Component B have to be at a specified distance and angle with respect to each other (e.g. to ensure that some mechanism will work)
- A Component A has to have a specified size (e.g. to ensure that the right version of the component has been used)

A specification for a component may define a correct value for any of a translation factor, a scaling factor, and a rotation factor. A specification may define a range of values instead of a correct value. A specification may define a correct value and a tolerance defining the range.

Finally, in step S4 the results of the method including checking whether the components are present and checking whether the specifications are met (e.g. applying the rules in the specifications) are summarized into an inspection report which may be available to the user. The inspection report may be customer specific and may include, for example, the list of rules that have failed, if any (i.e. computed factors that disagree with the correct value given in a specification), or the list of rules that have not failed (i.e. computed factors that agree with the correct value given in a specification) but which are close to the limits of the specifications.

The operation of the apparatus 10 and the method may not comprise all of the steps described above and illustrated in Figures 1 and 2. For example, the operation of the apparatus 10 (i.e. the method) may comprise detection of a component by determining whether or not the component is present in the inspection target 1 and may not comprise computing any rotation/translation/scaling factors and/or checking them against a specification. The method may comprise, for a component, computing at least one of a rotation factor, a translation factor, and a scaling factor between the component and a part of the inspection target 1 corresponding to the component, and checking the computed at least one factor against a specification defining a correct value for the at least one factor, and determining whether the computed at least one factor is equal to the correct value defined in the specification (or within the range defined in the specification). The inspection report may comprise a determination of whether the computed at least one factor is equal to the correct value defined in the specification.

Further aspects of the invention are now described in more detail.

### 1. Conversion to point cloud

For the case where the inspection target 1 is a physical object, a 3D point-cloud representation may be obtained using 3D scanning hardware. Examples of such hardware are:
- Structured light sensors, such as Microsoft Kinect, Intel RealSense (D4xx series) or Occipital Structure Sensor
- Time-of-flight sensors such as those based on the DepthSense 325
- LiDAR cameras such as Intel RealSense L515
- Two or more normal cameras in combination with Photogrammetry

Optionally, in order to increase the resolution of the 3D scan or to generate a more complete scan (with fewer missing regions), multiple 3D scans may be merged into one larger scan using a Point-Cloud registration process.

For the case where the inspection target 1 is a design (i.e. a 3D representation of the inspection target 1), a 3D point-cloud representation may be obtained by sampling the surfaces (boundaries) of at least one (CAD) model of the inspection target 1. Such functions are readily available in off-the-shelf software such as CloudCompare (available at www.cloudcompare.org), which may be used to, for example, convert a triangulated model (e.g. in STL format) into a 3D point-cloud representation at a specified level of detail.

One or both of the conversion of the inspection target 1 and the conversion of the component(s) to a 3D point-cloud representation may be omitted from the method and may not be performed by the apparatus 10. For example, the 3D point-cloud representations of the inspection target 1 and the component(s) may be readily available.

### 2. The component DB

The component DB according to an example arrangement will be described.

A component may have multiple different shapes (variations) and, as described above, these may be considered as individual components (e.g. they may be stored as individual, different components in the component DB). The term "shape" or "component shape" can therefore be considered to mean "component" in the case where the component has only one shape or variation, or to mean a particular shape or variation of the component in the case where the component has multiple different shapes or variations.

The component DB is a database which contains the names and geometrical descriptions for all the components that are referenced in the design specification. The components are preferably provided as CAD models and may be represented in different ways such as in an analytical form (e.g. STEP, IGES, etc.), a triangulated form (e.g. STL, PLY, OBJ, etc.) or a point-cloud form (e.g. LAS, CSV, etc.). As previously described, for components where the shape may vary, multiple CAD models may be stored in the component DB to account for the different variations. Alternatively, each variation may be stored in the component DB under a different name.

For each shape/component, the component DB contains information regarding the orientation of that shape in 3D space. In other words, an orientation of the component is stored in the component DB. In this case the detected orientation (the computed rotation factor) may be not absolute but may be relative to the orientation of the component stored in the component DB. In other words, the computed rotation factor is a rotation factor between the orientation stored in the component database and an orientation of the part of the inspection target 1 corresponding to the component. The absolute orientation of the detected components may be obtained by combining the initial, stored orientation, with the detected one. The orientation may be stored in multiple ways, such as a sequence of rotation angles with respect to a coordinate axis or as a rotation matrix.

The correct value for the rotation factor in the specification may comprise a sequence of rotation angles with respect to a coordinate axis between the orientation of the component stored in the component database and the orientation of the part of the inspection target 1 corresponding to the component, or a rotation matrix describing a rotation between the orientation of the component stored in the component database and the orientation of the part of the inspection target 1 corresponding to the component.

In addition, the dimension of each component/shape may be also stored for convenience. However, this not a strong requirement since, unlike orientation, it may be easily derived from the component shape.

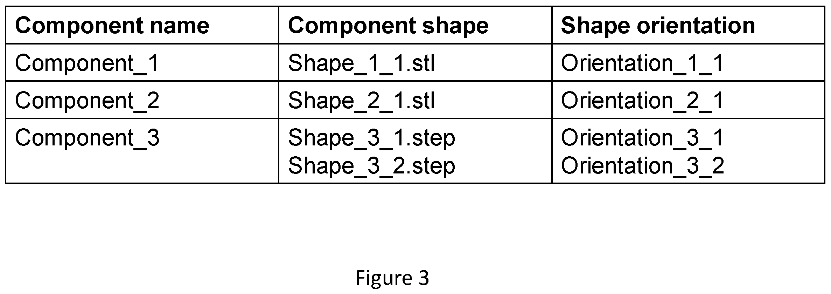

An example structure for the component DB is shown in Figure 3 where three components are stored. The first two components have only one shape/variation which is given in the form of a STL file. The 3^{rd} component has two shapes/variations, each of them being given as a STEP file. The orientation of each of the components is provided as well.

The component DB may store a single component and/or may not store the orientation of the component. The component DB may store multiple components and may store the orientation as described above for at least one of the components. The component DB is not essential and any information regarding the components (e.g. the shape/orientation/dimensions/3D point-cloud representation) may be provided without being stored in a component DB.

A translation factor may be a translation factor between the component and the part of the inspection target identified as corresponding to the component, wherein the component is considered to be located at a fixed position in the (coordinate axes of the) inspection target (which may be defined in the component DB or may be predefined in another way (e.g. assumed by the method) - for example the component may be considered for the purpose of computing a translation factor to be located at the origin of the (coordinate axes of the) inspection target, and the translation factor may be a factor between this location and the location within the (coordinate axes of the) inspection target at which the part of the inspection target identified as corresponding to the component is located.

A specification for any component may be stored in the component DB.

### 3. Locating components

The process/step of locating a component according to an example arrangement will be described. The step of locating a component corresponds to step S2 in Figure 2.

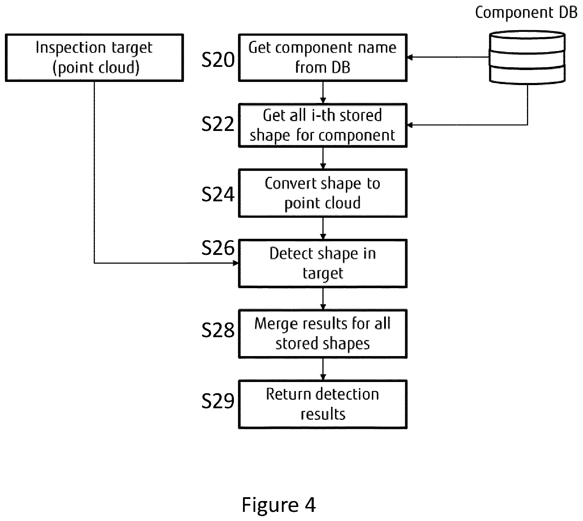

The process of locating a component inside the inspection target 1 is shown in Figure 4 and involves locating all instances of a given component, specified by name, and present in the component DB, in the inspection target 1 that is in a point cloud form (a 3D point-cloud representation).

In steps S20 and S22, all shapes (in CAD form) that have been associated to a given component name are read (for example there may only be one shape/variation for a component, in which case the component is read). In step S24 the CAD shapes are converted to point cloud form (3D point-cloud representation) using the same process that was used to convert the inspection target 1 to point cloud (3D point-cloud representation). It is not essential that the same (or a similar) process is used, however it is advantageous to use the same process or at least a similar process because this means the 3D point-cloud representation of the inspection target 1 will have a similar point distribution to the 3D point-cloud representations of the CAD shapes. Preferably, the conversion uses conversion parameters similar to (or the same as) those used when converting the inspection target 1 to point cloud form (3D point-cloud representation) in order to obtain a 3D point-cloud representation with similar density and characteristics. For example, it is advantageous to use substantially the same, or at least a substantially similar, sampling resolution in the conversion. The conversion to a point cloud format may be performed using a sampling procedure, where points of a given density are randomly placed on triangles of a mesh. This procedure is not restricted to a particular format and any (e.g. CAD) format may be sampled in this way.

In step S26 each stored shape (now in point cloud form) is detected/searched for in the 3D point-cloud representation of the inspection target 1. In step S29 the location/position, orientation and scale for each match are returned, or an empty list is returned for a component/shape if there is not a positive match (if the component/shape is not detected in the inspection target 1). If the number of shapes is greater than one, then in step S28 the results are merged and then returned in step S29. The merging operation may be performed by appending all the detection results. Step S29 may be combined with step S4 in Figure 2 in an example arrangement.

Some of the steps of the process illustrated in Figure 4 may be omitted. For example, the process of locating a component may relate to a single component (i.e. no multiple shapes) or to multiple components each with a single shape, and/or may comprise only step S26, detecting the component in the 3D point-cloud representation of the inspection target 1. The process may not comprise computing any rotation/translation/scaling factors to check against a specification. The method may comprise, for a component, computing at least one of a rotation factor, a translation factor, and a scaling factor between the component and a part of the inspection target 1 corresponding to the component, and checking the computed at least one factor against a specification defining a correct value for the at least one factor, and determining whether the computed at least one factor is equal to the correct value defined in the specification.

A process by which a component is detected in the inspection target 1 according to an example arrangement will be described.

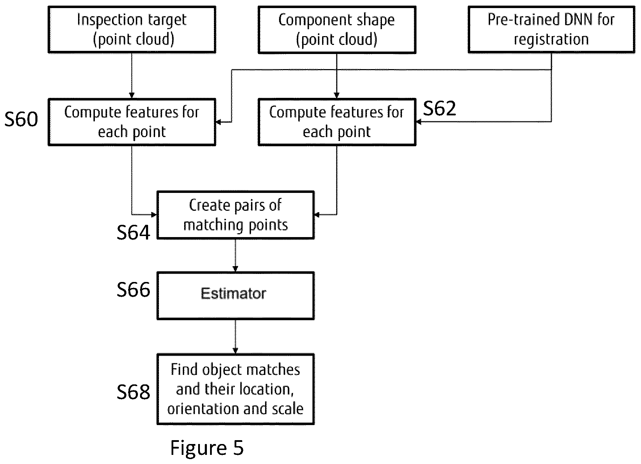

The process by which the shape of a component (or simply a component) is detected inside the inspection target 1 is shown in Figure 5. This process provides a way of detecting a shape without providing component-specific labelled data.

The input to this process consists of the inspection target 1 and the shape of the component to be detected, both represented as point clouds, i.e. a 3D point cloud representation of the inspection target and a 3D point cloud representation of the component. An additional input is a pre-trained Deep Neural Network (DNN) that has been trained on a separate dataset for the purpose of point cloud registration. For example, the DNN architecture could be the Fully Convolutional Geometric Features (FCGF) as described in "Fully Convolutional Geometric Features", by Choy et al (available at https://node1.chrischoy.org/data/publications/fcgf/fcgf.pdf), which was trained on a registration dataset such as "3D Match" (described in "3DMatch: Learning Local Geometric Descriptors from RGB-D Reconstructions", by Zeng et al, available at https://arxiv.org/abs/1603.08182). Alternatively or additionally, the DNN could be trained on partial shapes of one or more components (e.g. the objects (components) present in the component database). The latter training may provide a network that fits the problem space better.

Using the pre-trained DNN, in steps S60 and S62 a per-point feature vector is computed for all points in both the inspection target 1 and the component shape. In other words, steps S60 and S62 comprise, respectively, computing target feature vectors for all points in the 3D point-cloud representation of the inspection target 1, and computing component feature vectors for all points in the 3D point-cloud representation of the component. Target feature vectors and component feature vectors may not be computed for all points, however. The computation of the target feature vectors and the component feature vectors using the pre-trained DNN is performed by placing the initial point cloud on the input (data) layer of the DNN, and executing the feed-forward step of the DNN and extracting the features from the output layer in the usual manner.

In step S64 the extracted features (the target feature vectors and the component feature vectors) are matched using a nearest neighbour search in the feature space by a solver. That is, matching is performed by the solver between the target feature vectors and the component feature vectors to obtain point pairs (pairs of matching points) each comprising a said point in the point-cloud representation of the inspection target 1 and a said point in the point-cloud representation of the component to determine whether the component is present in the inspection target 1.

Next, a geometric transformation is computed between the inspection target 1 and the component shape using a robust estimator such as RANSAC or Teaser++ (available at https://github.com/MIT-SPARK/TEASER-plusplus#minimal-c-example) which may be a part of the solver.

That is, in step S66 the pairs of points (the point pairs) are fed to the robust estimator, which in this example is Teaser++ (available at https://github.com/MIT-SPARK/TEASER-plusplus#minimal-c-example). In step S68 the robust estimator finds a geometric transformation between the component shape and the inspection target 1 (or vice versa) that maximises the number (or proportion) of points correctly matched between the inspection target 1 and the component shape (i.e. a point pair as determined in the preceding step is considered to be a "correct" match). In other words, the robust estimator finds a geometric transformation that maximises the number (or proportion) of point pairs. In other words, the robust estimator finds a geometric transformation that maximises the number (or proportion) of points matched according to the transformation that correspond to (are the same as one of) the previously determined point pairs. The point pairs may be referred to as "matching" point pairs, and a geometric transformation computed by the robust estimator may be considered to give rise to geometric point pairs (each comprising a said point in the point-cloud representation of the inspection target and a said point in the point-cloud representation of the component), and therefore the robust estimator finds a geometric transformation which maximizes the number (or proportion) of the geometric point pairs which correspond to (or are the same as) a matching point pair.

The "correct" matches (i.e. the points matched according to the transformation that correspond to the previously determined point pairs) may be referred to as inliers. The robust estimator may automatically find rotation, translation and scaling factors. The robust estimator eventually finds a set of inliers (correct correspondences). A positive match is determined when the number (or proportion) of inliers exceeds a pre-defined threshold (for example 10) and, for a positive match, a rotation matrix may be used to check the correct orientation of the component. An inlier is considered by the solver to be a correct match in the sense that it corresponds to a previously determined point pair (i.e. those points are also matched in a point pair), however the overall (system-level) correctness of an inlier can only be determined by comparing the match to ground truth (e.g. hand-labelled data).

The process by which a component is detected in the inspection target 1 may not comprise all of the steps illustrated in Figure 5. For example, in embodiments not covered by the claimed invention the detection of the component may end by determining whether or not the component is present in the inspection target 1 and may not comprise computing any rotation/translation/scaling factors.

The process may comprise computing at least one of a rotation factor, a translation factor, and a scaling factor between the component and a part of the inspection target 1 corresponding to the component and defined by the point pairs, for example after determining that the component is present in the inspection target 1. The process may further comprise checking the computed at least one factor against the specification (design specification) defining a correct value for the at least one factor, and determining whether the computed at least one factor is equal to the correct value defined in the specification. The results of this check may be included in the inspection report, i.e. the inspection report may comprise a determination of whether the computed at least one factor is equal to the correct value defined in the specification. In other words, the inspection report may comprise a determination of whether the component is present in the inspection target 1 in agreement with the correct value defined in the specification.

An example of applying the automatic inspection method, e.g. performed by the apparatus 10, to the task of checking the type and orientation of clips used in the design of a laptop cover will be described.

In this example it is assumed that the user of the apparatus 10 provides the apparatus 10 with two inputs:
- A 3D model of the laptop cover, stored in STL (triangulated) format
- A 3D model for the clip that needs to be used for that model, in its reference orientation, also stored in an STL format

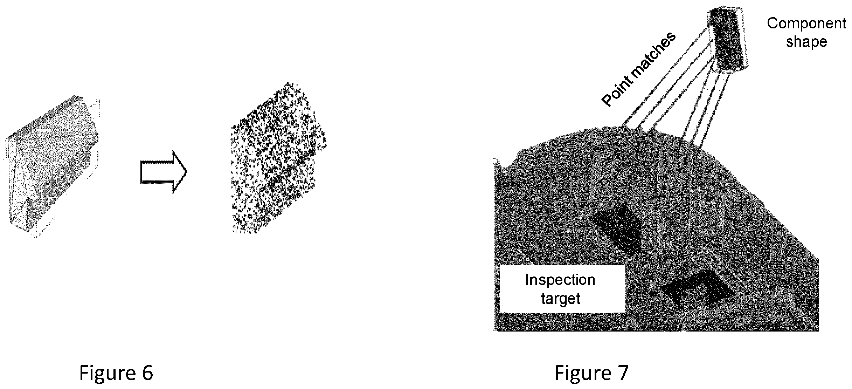

In a pre-processing step, both 3D models are converted from a triangulated form into a point cloud form (3D point-cloud representations). The conversion to a point cloud format is performed using a sampling procedure, where points of a given density are randomly placed on the triangles of the mesh. This procedure is not restricted to STL format and any (e.g. CAD) format may be sampled in this way. A conversion routine for this purpose may be easily implemented, and it is also readily available in open source software such as Cloud Compare. An example of the result of this procedure for the clip model is shown in Figure 6.

Following the process in Figure 5, in addition to the point clouds corresponding to the inspection target 1 and component shape, a pre-trained DL model DNN is provided to be used for feature extraction (for computation of the target and component feature vectors as in steps S60 and S62). In this example, the model (the DL model DNN) was created by pre-training a Fully Convolutional Geometric Features (FCGF) model on the 3D Match dataset. The solver is then used to predict pairs of corresponding points between the component shape and inspection target 1. Some of these point correspondences are shown as lines in Figure 7. Note that for clarity only correct matches are shown in Figure 7, however there are also many incorrect matches between component shape points and inspection target 1 points.

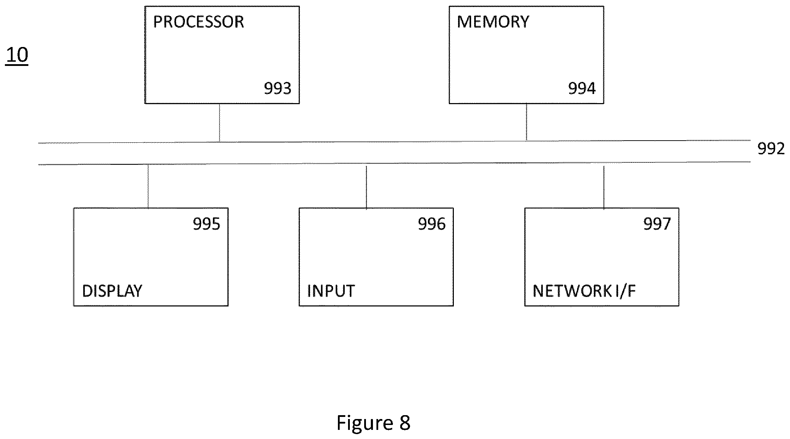

Figure 8 is a block diagram of a computing device 10, such as a data storage server, which embodies the present invention, and which may be used to implement some or all of the operations of a method embodying the present invention, and perform some or all of the tasks of apparatus of an embodiment. The computing device is an example of the apparatus 10 and may be used to implement any of the automatic inspection method steps.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions, such as in the form of computer program code. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing an automatic inspection method disclosed herein. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the automatic inspection methods described herein. The memory 994 stores data being read and written by the processor 993 and may store a component DB as described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device, such as a component DB and/or an inspection report as described above, and may also display a cursor and dialog boxes and screens enabling interaction between a user and the programs and data stored on the computing device. The input mechanisms 996 may enable a user to input data and instructions to the computing device, such as selecting components from a component DB to be searched for in the inspection target 1.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 8. Such a computing device need not have every component illustrated in Figure 8, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995 for displaying an inspection report. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention can be implemented in digital electronic circuitry, or in computer hardware, firmware, software, or in combinations of them. The invention can be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network. Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

## Claims

1. A computer-implemented automatic inspection method comprising:
computing (S60) target feature vectors for points in a 3D point-cloud representation of an inspection target;
computing (S62) component feature vectors for points in a 3D point-cloud representation of a component; and
performing (S64) matching between the target feature vectors and the component feature vectors to obtain point pairs each comprising a said point in the 3D point-cloud representation of the inspection target and a said point in the 3D point-cloud representation of the component to determine whether the component is present in the inspection target,
**characterized in that** the method further comprises computing (S68) a geometric transformation between the component and the inspection target and determining that the component is present in the inspection target when a result of the geometric transformation meets a predefined criterion.

2. The method as claimed in claim 1, comprising using a pre-trained deep neural network, DNN, to compute the target feature vectors and the component feature vectors.

3. The method as claimed in claim 1 or claim 2, comprising performing matching by using a nearest neighbor search in a feature space of the target feature vectors and the component feature vectors.

4. The method as claimed in any of the preceding claims, wherein the inspection target is a manufactured product.

5. The method as claimed in any of the preceding claims, wherein the method comprises:
computing at least one of a rotation factor, a translation factor, and a scaling factor between the component and a part of the inspection target corresponding to the component and defined by the point pairs; and
checking the computed at least one factor against a specification defining a range of values for the at least one factor, and determining whether the computed at least one factor is within the range of values defined in the specification.

6. The method as claimed in any of the preceding claims, comprising, for each of a plurality of components,
computing feature vectors for points in a 3D point-cloud representation of the component; and
performing matching between the target feature vectors and the component feature vectors to obtain point pairs each comprising a said point in the 3D point-cloud representation of the inspection target and a said point in the 3D point-cloud representation of the component to determine whether the component is present in the inspection target.

7. The method as claimed in claim 6, comprising:
computing a distance and/or an angle between first and second components of the plurality of components; and
checking the computed distance and/or angle against a specification defining a range of values of the distance between the first and second components and/or a range of values of the angle between the first component and the second component and determining whether the computed distance and/or angle is within the range of values defined in the specification.

8. A computer program which, when run on a computer, causes the computer to:
compute (S60) target feature vectors for points in a 3D point-cloud representation of an inspection target;
compute (S62) component feature vectors for points in a 3D point-cloud representation of a component; and
perform (S64) matching between the target feature vectors and the component feature vectors to obtain point pairs each comprising a said point in the 3D point-cloud representation of the inspection target and a said point in the 3D point-cloud representation of the component to determine whether the component is present in the inspection target,
**characterized in that** the computer program further causes the computer to compute (S68) a geometric transformation between the component and the inspection target and determine that the component is present in the inspection target when a result of the geometric transformation meets a predefined criterion.

9. The computer program as claimed in claim 8, further causing the computer to:
compute at least one of a rotation factor, a translation factor, and a scaling factor between the component and a part of the inspection target corresponding to the component and defined by the point pairs; and
check the computed at least one factor against a specification defining a range of values for the at least one factor, and determine whether the computed at least one factor is within the range of values defined in the specification.

10. The computer program as claimed in claim 8 or claim 9, further causing the computer to use a pre-trained deep neural network, DNN, to compute the target feature vectors and the component feature vectors.

11. The computer program as claimed in any of claims 8 to 10, further causing the computer to perform matching by using a nearest neighbor search in a feature space of the target feature vectors and the component feature vectors.

12. An information processing apparatus (10) comprising a memory (994) and a processor (993) connected to the memory (994), wherein the processor (993) is configured to:
compute target feature vectors for points in a 3D point-cloud representation of an inspection target;
compute component feature vectors for points in a 3D point-cloud representation of a component; and
perform matching between the target feature vectors and the component feature vectors to obtain point pairs each comprising a said point in the 3D point-cloud representation of the inspection target and a said point in the 3D point-cloud representation of the component to determine whether the component is present in the inspection target,
**characterized in that** the processor (993) is further configured to compute a geometric transformation between the component and the inspection target and determine that the component is present in the inspection target when a result of the geometric transformation meets a predefined criterion.

13. The apparatus (10) as claimed in claim 12, wherein the processor (993) is configured to:
compute at least one of a rotation factor, a translation factor, and a scaling factor between the component and a part of the inspection target corresponding to the component and defined by the point pairs; and
check the computed at least one factor against a specification defining a range of values for the at least one factor, and determine whether the computed at least one factor is within the range of values defined in the specification.

14. The apparatus (10) as claimed in claim 12 or claim 13, wherein the processor (993) is configured to use a pre-trained deep neural network, DNN, to compute the target feature vectors and the component feature vectors.

## Patentansprüche

1. Computerimplementiertes automatisches Prüfverfahren, umfassend:
Berechnen (S60) von Zielmerkmalsvektoren für Punkte in einer 3D-Punktwolkendarstellung eines Prüfziels;
Berechnen (S62) von Komponentenmerkmalsvektoren für Punkte in einer 3D-Punktwolkendarstellung einer Komponente; und
Durchführen (S64) eines Abgleichs zwischen den Zielmerkmalsvektoren und den Komponentenmerkmalsvektoren, um Punktpaare zu erhalten, die jeweils einen Punkt in der 3D-Punktwolkendarstellung des Prüfziels und einen Punkt in der 3D-Punktwolkendarstellung der Komponente umfassen, um zu bestimmen, ob die Komponente in dem Prüfziel vorhanden ist,
**dadurch gekennzeichnet, dass** das Verfahren ferner Berechnen (S68) einer geometrischen Transformation zwischen der Komponente und dem Prüfziel und Bestimmen, dass die Komponente im Prüfziel vorhanden ist, wenn ein Ergebnis der geometrischen Transformation ein vordefiniertes Kriterium erfüllt, umfasst.

2. Verfahren nach Anspruch 1, umfassend das Verwenden eines vortrainierten tiefen neuronalen Netzes, DNN, um die Zielmerkmalsvektoren und die Komponentenmerkmalsvektoren zu berechnen.

3. Verfahren nach Anspruch 1 oder Anspruch 2, umfassend Durchführen eines Abgleichs durch Verwenden einer Suche nach dem nächsten Nachbarn in einem Merkmalsraum der Zielmerkmalsvektoren und der Komponentenmerkmalsvektoren.

4. Verfahren nach einem der vorhergehenden Ansprüche, wobei das Prüfziel ein hergestelltes Produkt ist.

5. Verfahren nach einem der vorhergehenden Ansprüche, wobei das Verfahren Folgendes umfasst:
Berechnen mindestens eines Rotationsfaktors, eines Translationsfaktors und eines Skalierungsfaktors zwischen der Komponente und einem Teil des Prüfziels, der der Komponente entspricht und durch die Punktpaare definiert ist; und
Überprüfen des berechneten mindestens einen Faktors anhand einer Spezifikation, die einen Wertebereich für den mindestens einen Faktor definiert, und Bestimmen, ob der berechnete mindestens eine Faktor innerhalb des in der Spezifikation definierten Wertebereichs liegt.

6. Verfahren nach einem der vorhergehenden Ansprüche, umfassend für jede einer Vielzahl von Komponenten
Berechnen von Merkmalsvektoren für Punkte in einer 3D-Punktwolkendarstellung der Komponente; und
Durchführen eines Abgleichs zwischen den Zielmerkmalsvektoren und den Komponentenmerkmalsvektoren, um Punktpaare zu erhalten, die jeweils einen Punkt in der 3D-Punktwolkendarstellung des Prüfziels und einen Punkt in der 3D-Punktwolkendarstellung der Komponente umfassen, um zu bestimmen, ob die Komponente in dem Prüfziel vorhanden ist.

7. Verfahren nach Anspruch 6, umfassend:
Berechnen einer Distanz und/oder eines Winkels zwischen ersten und zweiten Komponenten der Vielzahl von Komponenten; und
Überprüfen der berechneten Distanz und/oder des Winkels anhand einer Spezifikation, die einen Wertebereich der Distanz zwischen der ersten und der zweiten Komponente und/oder einen Wertebereich des Winkels zwischen der ersten Komponente und der zweiten Komponente definiert, und Bestimmen, ob die berechnete Distanz und/oder der Winkel innerhalb des in der Spezifikation definierten Wertebereichs liegt.

8. Computerprogramm, das, wenn es auf einem Computer ausgeführt wird, den Computer zu Folgendem veranlasst:
Berechnen (S60) von Zielmerkmalsvektoren für Punkte in einer 3D-Punktwolkendarstellung eines Prüfziels;
Berechnen (S62) von Komponentenmerkmalsvektoren für Punkte in einer 3D-Punktwolkendarstellung einer Komponente; und
Durchführen (S64) eines Abgleichs zwischen den Zielmerkmalsvektoren und den Komponentenmerkmalsvektoren, um Punktpaare zu erhalten, die jeweils einen Punkt in der 3D-Punktwolkendarstellung des Prüfziels und einen Punkt in der 3D-Punktwolkendarstellung der Komponente umfassen, um zu bestimmen, ob die Komponente in dem Prüfziel vorhanden ist,
**dadurch gekennzeichnet, dass** das Computerprogramm den Computer ferner zum Berechnen (S68) einer geometrischen Transformation zwischen der Komponente und dem Prüfziel und zum Bestimmen, dass die Komponente im Prüfziel vorhanden ist, wenn ein Ergebnis der geometrischen Transformation ein vordefiniertes Kriterium erfüllt, veranlasst.

9. Computerprogramm nach Anspruch 8, den Computer ferner zu Folgendem veranlassend:
Berechnen mindestens eines Rotationsfaktors, eines Translationsfaktors und eines Skalierungsfaktors zwischen der Komponente und einem Teil des Prüfziels, der der Komponente entspricht und durch die Punktpaare definiert ist; und
Überprüfen des berechneten mindestens einen Faktors anhand einer Spezifikation, die einen Wertebereich für den mindestens einen Faktor definiert, und Bestimmen, ob der berechnete mindestens eine Faktor innerhalb des in der Spezifikation definierten Wertebereichs liegt.

10. Computerprogramm nach Anspruch 8 oder Anspruch 9, das den Computer ferner dazu veranlasst, ein vorab trainiertes tiefes neuronales Netz, DNN, zu verwenden, um die Zielmerkmalsvektoren und die Komponentenmerkmalsvektoren zu berechnen.

11. Computerprogramm nach einem der Ansprüche 8 bis 10, das den Computer ferner dazu veranlasst, einen Abgleich durch Verwenden einer Suche nach dem nächsten Nachbarn in einem Merkmalsraum der Zielmerkmalsvektoren und der Komponentenmerkmalsvektoren durchzuführen.

12. Informationsverarbeitungsvorrichtung (10), umfassend einen Speicher (994) und einen mit dem Speicher (994) verbundenen Prozessor (993), wobei der Prozessor (993) für Folgendes konfiguriert ist:
Berechnen von Zielmerkmalsvektoren für Punkte in einer 3D-Punktwolkendarstellung eines Prüfziels;
Berechnen von Komponentenmerkmalsvektoren für Punkte in einer 3D-Punktwolkendarstellung einer Komponente; und
Durchführen eines Abgleichs zwischen den Zielmerkmalsvektoren und den Komponentenmerkmalsvektoren, um Punktpaare zu erhalten,
die jeweils einen Punkt in der 3D-Punktwolkendarstellung des Prüfziels und einen Punkt in der 3D-Punktwolkendarstellung der Komponente umfassen, um zu bestimmen, ob die Komponente in dem Prüfziel vorhanden ist,
**dadurch gekennzeichnet, dass** der Prozessor (993) ferner zum Berechnen einer geometrischen Transformation zwischen der Komponente und dem Prüfziel und zum Bestimmen, dass die Komponente im Prüfziel vorhanden ist, wenn ein Ergebnis der geometrischen Transformation ein vordefiniertes Kriterium erfüllt, konfiguriert ist.

13. Vorrichtung (10) nach Anspruch 12, wobei der Prozessor (993) für Folgendes konfiguriert ist:
Berechnen mindestens eines Rotationsfaktors, eines Translationsfaktors und eines Skalierungsfaktors zwischen der Komponente und einem Teil des Prüfziels, der der Komponente entspricht und durch die Punktpaare definiert ist; und Überprüfen des berechneten mindestens einen Faktors anhand einer Spezifikation, die einen Wertebereich für den mindestens einen Faktor definiert, und Bestimmen, ob der berechnete mindestens eine Faktor innerhalb des in der Spezifikation definierten Wertebereichs liegt.

14. Vorrichtung (10) nach Anspruch 12 oder Anspruch 13, wobei der Prozessor (993) dazu konfiguriert ist, ein vorab trainiertes tiefes neuronales Netz, DNN, zu verwenden, um die Zielmerkmalsvektoren und die Komponentenmerkmalsvektoren zu berechnen.

## Revendications

1. Procédé d'inspection automatique mis en œuvre par ordinateur comprenant :
le calcul (S60) des vecteurs de caractéristique cible pour des points dans une représentation en nuage de points 3D d'une cible d'inspection ;
le calcul (S62) des vecteurs de caractéristique de composant pour des points dans une représentation en nuage de points 3D d'un composant ; et
l'exécution (S64) d'une mise en correspondance entre les vecteurs de caractéristique cible et les vecteurs de caractéristique de composant pour obtenir des paires de points comprenant chacune un dit point dans la représentation en nuage de points 3D de la cible d'inspection et un dit point dans la représentation en nuage de points 3D du composant pour déterminer si le composant est présent dans la cible d'inspection,
**caractérisé en ce que** le procédé comprend en outre le calcul (S68) d'une transformation géométrique entre le composant et
la cible d'inspection et la détermination du fait que le composant est présent dans la cible d'inspection lorsqu'un résultat de la transformation géométrique répond à un critère prédéfini.

2. Procédé selon la revendication 1, comprenant l'utilisation d'un réseau neuronal profond, RNP, pré-entraîné, pour calculer les vecteurs de caractéristique cible et les vecteurs de caractéristique de composant.

3. Procédé selon la revendication 1 ou la revendication 2, comprenant l'exécution d'une mise en correspondance en utilisant une recherche du voisin le plus proche dans un espace de caractéristique des vecteurs de caractéristique cible et des vecteurs de caractéristique de composant.

4. Procédé selon l'une quelconque des revendications précédentes, dans lequel la cible d'inspection est un produit manufacturé.

5. Procédé selon l'une quelconque des revendications précédentes, dans lequel le procédé comprend :
le calcul d'au moins un parmi un facteur de rotation, un facteur de translation et un facteur de mise à l'échelle entre le composant et une partie de la cible d'inspection correspondant au composant et définie par les paires de points ; et
la vérification de l'au moins un facteur calculé par rapport à une spécification définissant une plage de valeurs pour l'au moins un facteur, et le fait de déterminer si l'au moins un facteur calculé se trouve dans la plage de valeurs définie dans la spécification.

6. Procédé selon l'une quelconque des revendications précédentes, comprenant, pour chacun d'une pluralité de composants,
le calcul des vecteurs de caractéristique pour des points dans une représentation en nuage de points 3D du composant ; et l'exécution d'une mise en correspondance entre les vecteurs de caractéristique cible et les vecteurs de caractéristique de composant pour obtenir des paires de points comprenant chacune un dit point dans la représentation en nuage de points 3D de la cible d'inspection et un dit point dans la représentation en nuage de points 3D du composant pour déterminer si le composant est présent dans la cible d'inspection.

7. Procédé selon la revendication 6, comprenant :
le calcul d'une distance et/ou d'un angle entre les premier et
second composants de la pluralité de composants ; et
la vérification de la distance et/ou de l'angle calculés par rapport à une spécification définissant une plage de valeurs de la distance entre les premier et second composants et/ou une plage de valeurs de l'angle entre le premier composant et
le second composant et le fait de déterminer si la distance et/ou l'angle calculés se trouvent dans la plage de valeurs définie dans la spécification.

8. Programme informatique qui, lorsqu'il est exécuté par un ordinateur, amène l'ordinateur à :
calculer (S60) des vecteurs de caractéristique cible pour des points dans une représentation en nuage de points 3D d'une cible d'inspection ;
calculer (S62) des vecteurs de caractéristique de composant pour des points dans une représentation en nuage de points 3D d'un composant ; et
exécuter (S64) une mise en correspondance entre les vecteurs de caractéristique cible et les vecteurs de caractéristique de composant pour obtenir des paires de points comprenant chacune un dit point dans la représentation en nuage de points 3D de la cible d'inspection et un dit point dans la représentation en nuage de points 3D du composant pour déterminer si le composant est présent dans la cible d'inspection,
**caractérisé en ce que** le programme informatique amène en outre l'ordinateur à calculer (S68) une transformation géométrique entre le composant et la cible d'inspection et à déterminer que le composant est présent dans la cible d'inspection lorsqu'un résultat de la transformation géométrique répond à un critère prédéfini.

9. Programme informatique selon la revendication 8, amenant en outre l'ordinateur à :
calculer au moins un parmi un facteur de rotation, un facteur de translation et un facteur de mise à l'échelle entre le composant et une partie de la cible d'inspection correspondant au composant et définie par les paires de points ; et
vérifier l'au moins un facteur calculé par rapport à une spécification définissant une plage de valeurs pour l'au moins un facteur, et déterminer si l'au moins un facteur calculé se trouve dans la plage de valeurs définie dans la spécification.

10. Programme informatique selon la revendication 8 ou la revendication 9, amenant en outre l'ordinateur à utiliser un réseau neuronal profond, RNP, pré-entraîné, pour calculer les vecteurs de caractéristique cible et les vecteurs de caractéristique de composant.

11. Programme informatique selon l'une quelconque des revendications 8 à 10, amenant en outre l'ordinateur à effectuer une mise en correspondance en utilisant une recherche du voisin le plus proche dans un espace de caractéristique des vecteurs de caractéristique cible et des vecteurs de caractéristique de composant.

12. Appareil de traitement d'informations (10) comprenant une mémoire (994) et un processeur (993) connecté à la mémoire (994), dans lequel le processeur (993) est configuré pour :
calculer des vecteurs de caractéristique cible pour des points dans une représentation en nuage de points 3D d'une cible d'inspection ;
calculer des vecteurs de caractéristique de composant pour des points dans une représentation en nuage de points 3D d'un composant ; et
exécuter une mise en correspondance entre les vecteurs de caractéristique cible et les vecteurs de caractéristique de composant pour obtenir des paires de points comprenant chacune un dit point dans la représentation en nuage de points 3D de la cible d'inspection et un dit point dans la représentation en nuage de points 3D du composant pour déterminer si le composant est présent dans la cible d'inspection,
**caractérisé en ce que** le processeur (993) est en outre configuré pour calculer une transformation géométrique entre le composant et la cible d'inspection et pour déterminer que le composant est présent dans la cible d'inspection lorsqu'un résultat de la transformation géométrique répond à un critère prédéfini.

13. Appareil (10) selon la revendication 12, dans lequel le processeur (993) est configuré pour :
calculer au moins un parmi un facteur de rotation, un facteur de translation et un facteur de mise à l'échelle entre le composant et une partie de la cible d'inspection correspondant au composant et définie par les paires de points ; et
vérifier l'au moins un facteur calculé par rapport à une spécification définissant une plage de valeurs pour l'au moins un facteur, et déterminer si l'au moins un facteur calculé se trouve dans la plage de valeurs définie dans la spécification.

14. Appareil (10) selon la revendication 12 ou la revendication 13, dans lequel le processeur (993) est configuré pour utiliser un réseau neuronal profond, RNP, pré-entraîné, pour calculer les vecteurs de caractéristique cible et les vecteurs de caractéristique de composant.
